# EUROPÄISCHE PATENTSCHRIFT

(11) **EP 3 155 710 B1**
(45) Veröffentlichungstag und Bekanntmachung des Hinweises auf die Patenterteilung: **03.10.2018**
(21) Anmeldenummer: 15719727.8
(22) Anmeldetag: 05.05.2015
(51) Int. Cl.: H02K 3/52, H02K 3/50

(54) **STATOR EINER ELEKTRISCHEN MASCHINE**
STATOR OF AN ELECTRIC MACHINE
STATOR D'UNE MACHINE ÉLECTRIQUE

(30) Priorität: 12.06.2014 DE 102014008327
(43) Veröffentlichungstag der Anmeldung: 19.04.2017
(73) Patentinhaber: Sieva D.O.O. - Poslovna Enota Idrija, 5280 Idrija (SI)
(72) Erfinder: KUMAR, Ludvik, 1371 Logatec (SI)
(74) Vertreter: Grättinger Möhring von Poschinger Patentanwälte Partnerschaft
(86) Internationale Anmeldenummer: PCT/EP2015/059830
(87) Internationale Veröffentlichungsnummer: WO 2015/188983

(56) Entgegenhaltungen:
- WO-A1-99/13552
- DE-A1-102012 202 131
- JP-A- 2001 069 710
- JP-A- 2003 189 533
- JP-A- 2012 060 831
- US-A1- 2012 019 081

## Beschreibung

Die vorliegende Erfindung betrifft einen eine Kernstruktur sowie eine Wicklungsanordnung mit einer Vielzahl in Umfangsrichtung zueinander versetzt positionierter Wicklungen umfassenden Stator einer elektrischen Maschine. Insbesondere betrifft die vorliegende Erfindung einen Stator einer elektrischen Maschine, umfassend eine Kernstruktur, eine Wicklungsanordnung mit einer Vielzahl um eine Achse in Umfangsrichtung zueinander versetzt positionierter Wicklungen und eine Verbindungsanordnung, welche mehrere Verbinder aufweist, die jeweils mindestens zwei der Wicklungen miteinander in Parallelschaltung verbinden und jeweils Verbindungsbögen umfassen, deren Erstreckung in radialer Richtung wesentlich größer ist als die in axialer Richtung, wobei die Verbindungsbögen jeweils an beiden Enden einstückig in zumindest abschnittsweise im Wesentlichen radial einwärts gerichtete, jeweils mit einer Wicklung verbundene Verbindungszungen übergehen.

Bei dynamoelektrischen Maschinen sind phasengleiche Wicklungen des Stators typischerweise über Verbinder in Parallelschaltung miteinander gekoppelt, wobei die Summe der einzelnen Verbinder (als Baugruppe) eine Verbindungsanordnung bildet. Für derartige Verbindungsanordnungen sind verschiedene Ausführungen bekannt. Gebräuchlich sind insbesondere Verbindungsanordnungen mit mehreren in axialer Richtung gestapelten, ebenen, aus Blech ausgestanzten Verbindungsbögen (oder kreisförmig geschlossenen Verbindungsringen), welche jeweils eine einstückig daran angeformte Anschlussfahne aufweisen (vgl. z.B. US 6958560 B2, US 7205689 B2, US 6208056 B1, US 7498702 B2 und JP 2002-153003 A). Die Verbindungsbögen (bzw. Verbindungsringe) weisen hier typischerweise einen flachen rechteckigen Querschnitt auf mit einer wesentlich größeren radialen als axialen Erstreckung. Entsprechendes gilt für die Verbindungsbogenabschnitte nach der JP 2001 069710 A1 und der US 2012/0019081 A1.

Die WO 99/13552 A1 offenbart einen Stator mit den eingangs angegebenen Merkmalen. Wie im Falle der vorstehend genannten Dokumente sind auch hier die - in axialer Richtung gestapelten - Verbindungsbögen aus Blech ausgestanzt, wobei an jedem Verbindungsbogen sowohl die zugehörigen Verbindungszungen als auch die jeweilige Anschlussfahne als Teil der betreffenden Stanzkontur angeformt sind. Entsprechendes gilt für den der JP 2012 60831 A1 entnehmbaren Stator eines bürstenlosen Elektromotors.

Die JP 2003 189533 A1 offenbart einen für einen Elektromotor bestimmten Anschlussblock mit einem spritzgegossenen Isolierenden Träger und darin eingebetteten, zueinander beabstandeten Leitern. Diese sind jeweils als Verbindungsbögen ausgeführt, indem ein Streifen eines elektrisch leitenden Materials in Kreisform gebogen wird. Durch Ausstanzen entsteht daraus jeweils ein Rohling mit radial nach innen gerichteten Anschlussfahnen, welche anschließend in eine axiale Ausrichtung gebogen werden.

Andere verbreitet eingesetzte Verbindungsanordnungen zeichnen sich dadurch aus, dass mehrere - wiederum jeweils eine einstückig daran angeformte Anschlussfahne aufweisende - Verbindungsbögen radial ineinander geschachtelt sind, wobei die Verbindungsbögen in diesem Fall typischerweise einen flachen rechteckigen Querschnitt mit einer wesentlich größeren axialen als radialen Erstreckung aufweisen (vgl. z.B. US 7193345 B2, DE 102011120984 A1, WO 2011/151692 A2, US 7557478 B2 und DE 10128769 B4). Bekannt sind darüber hinaus aus Draht gebogene Verbinder (vgl. z.B. EP 1739809 A1, CN 101562373 B und EP 2562915 A2), teilweise mit daran angeklemmten Verbindungsstücken. Innerhalb dieser drei Hauptgruppen gibt es mannigfaltige Ausführungsvarianten, und zwar weit mehr, als in den vorstehend aufgeführten Druckschriften offenbart.

Die große Anzahl von Vorschlägen für die konstruktive Ausgestaltung von Verbindungsanordnungen der hier in Rede stehenden Art zeigt, dass ein großes Bedürfnis besteht für eine sämtlichen wesentlichen praxisrelevanten Anforderungen genügende Verbindungsanordnung. Eine optimale Lösung ist, wie die fortgesetzten Bemühungen um eine Verbesserung zeigen, noch nicht gefunden, was auch damit zusammenhängt, dass einzelne der wesentlichen Anforderungen (kompakte Bauweise mit geringem Platzbedarf, Zuverlässigkeit und Langlebigkeit, geringer Materialverbrauch, einfache Herstellbarkeit zu niedrigen Kosten) in einem Konflikt bzw. Konkurrenzverhältnis zueinander stehen.

Im Lichte des vorstehend dargelegten Standes der Technik liegt der vorliegenden Erfindung die Aufgabe zugrunde, einen Stator der eingangs angegebenen Art bereitzustellen, der bei hoher Leistungsfähigkeit und Praxistauglichkeit besonders kostengünstig herstellbar ist, namentlich mit besonders hoher Materialeffizienz hinsichtlich der Herstellung der Verbindungsanordnung.

Gemäß der vorliegenden Erfindung wird die vorstehend dargelegte Aufgabenstellung durch den Stator nach Anspruch 1 gelöst. Demgemäß zeichnet sich der erfindungsgemäße Stator zusätzlich zu den eingangs angegebenen Merkmalen insbesondere durch Verbindungsbögen aus, die aus jeweils einem Abschnitt eines metallischen Flachstreifenmaterials gebogen sind, an denen jeweils eine separat vorgefertigte Anschlussfahne angebracht ist und die im Bereich jeweils einer 180°-Faltung in die Verbindungszungen übergehen, wobei die Verbindungszungen und die Verbindungsbögen benachbart der Faltung flächig aneinander anliegen. Indem die Verbindungsbögen samt den beiden an ihnen endseitig angeordneten Verbindungszungen durch eine mehrstufige Verformung aus einem Abschnitt eines metallischen Flachstreifenmaterials hervorgehen, ist insoweit eine Herstellung der Verbindungsbögen ohne jeglichen Verschnitt, d.h. unter optimaler Materialausnutzung möglich. Im Sinne einer hohen Wirtschaftlichkeit im weiteren Sinne kommt darüber hinaus zum Tragen, dass sich das identische Flachstreifenmaterial für die Herstellung unterschiedlicher Verbindungsbögen für verschiedene Statorausführungen verwenden lässt. Durch das Biegen des metallischen Flachstreifenmaterials zu den Verbindungsbögen dergestalt, dass die größere Dimension des Flachstreifenmaterials in radiale Richtung (mit Bezug auf die Achse), die kleinere Dimension des Flachstreifenmaterials indessen in axiale Richtung (mit Bezug auf die Achse) weist, ergeben sich darüber hinaus besonders formstabile Verbinder. Diese können somit, ohne dass die Gefahr eines Kurzschlusses besteht, besonders nahe zueinander platziert werden. Dies erlaubt hinwiederum eine besonders kompakte Ausführung der Verbindungsanordnung. Andersherum betrachtet bedeutet dies, dass sich auf einem vorgegebenen Raum für die Verbindungsanordnung Verbinder mit einem besonders großen Querschnitt unterbringen lassen, was sowohl der Leistungsfähigkeit als auch der Betriebssicherheit des Stators entgegenkommt.

Indem gemäß der vorliegenden Erfindung die Anschlussfahnen durch separat vorgefertigte, an den Verbindungsbögen angebrachte Teile realisiert sind, lässt sich auf besonders einfache Weise realisieren, dass die Anschlussfahnen aus einem andersartigen Material bestehende Oberflächen aufweisen als die Verbindungszungen, insbesondere indem sie bevorzugt vor ihrer Anbringung an dem jeweiligen Verbindungsbogen galvanisch beschichtet (z.B. verzinnt oder versilbert) sind. Auf diese Weise trägt die vorliegende Erfindung einfach und kostengünstig dem Umstand Rechnung, dass zum Verbinden eines Versorgungskabels mit der Anschlussfahne idealerweise eine andere Technologie zum Einsatz kommt als bei der Verbindung der Wicklungen mit den Verbindungszungen. So können im Rahmen der vorliegenden Erfindung die Wicklungen mit den Verbindungszungen namentlich durch Hartlöten oder Widerstandsschweißen verbunden werden, wozu galvanische Beschichtungen unerwünscht sind, wohingegen für ein bevorzugt eingesetztes Verschweißen der Versorgungskabel mit den Anschlussfahnen dort eine galvanisch angebrachte Beschichtung (Zinn, Silber oder dgl.) günstig ist. Die selektiv unterschiedliche Ausführung der Oberflächen der Anschlussfahnen einerseits und der Verbindungszungen andererseits ist, wie dargelegt, in Umsetzung der vorliegenden Erfindung in besonders einfacher Weise möglich. Zur Verbindung der Anschlussfahnen mit den Verbindungsbögen kommen im Rahmen der vorliegenden Erfindung verschiedene Fügeverfahren in Betracht. Besonders bevorzugt erfolgt ein Hartverlöten unter Verwendung eines Silfos-Materials (z.B. Silfos-Pulver).

Da bei dem erfindungsgemäßen Stator die Verbindungsbögen in axialer Staffelung nebeneinander angeordnet sind, können sämtliche Verbindungsbögen mit dem identischen Radius gebogen werden. Dies ist im Hinblick auf eine effiziente Herstellung des Stators ein interessanter Aspekt. Entsprechendes gilt für die - bei zweckmäßiger Umsetzung der vorliegenden Erfindung bestehende - Möglichkeit, dass sämtliche Verbindungsbögen der Verbindungsanordnung aus gleich langen Abschnitten aus metallischem Flachstreifenmaterial hergestellt werden können, wobei die Abschnitte insbesondere aus einem Endlosband geschnitten sein können.

Was das den erfindungsgemäßen Stator charakterisierende Merkmal betrifft, wonach die Verbindungsbögen dergestalt im Bereich jeweils einer 180°-Faltung in die Verbindungszungen übergehen, dass die Verbindungszungen und die Verbindungsbögen benachbart der Faltung flächig aneinander anliegen, so kann dabei im Hinblick auf die Möglichkeit einer besonders kompakten Ausführung der Verbindungsanordnung - zumindest an einem Teil der Verbinder der Verbindungsanordnung - eine Faltung der Verbindungszungen zu unterschiedlichen Seiten des jeweiligen Verbindungsbogens dergestalt erfolgen, dass eine Verbindungszunge auf der einen flachen Seite des Verbindungsbogens anliegt und die andere Verbindungszunge an der anderen, gegenüberliegenden flachen Seite des Verbindungsbogens.

Gemäß einer ersten bevorzugten Weiterbildung der Erfindung umfassen die Verbindungszungen jeweils zusätzlich zu einem im Wesentlichen radial einwärts gerichteten Abschnitt einen hierzu abgewinkelten, im wesentlichen axial orientierten Abschnitt. Die Enden der axial orientierten Abschnitte dienen dabei der Verbindung der jeweiligen Wicklungen mit dem betreffenden Verbindungsbogen. Bevorzugt enden insoweit die Verbindungszungen sämtlicher Verbinder - an ihren im wesentlichen axial orientierten Abschnitten - im wesentlichen in einer Ebene, welche bevorzugt senkrecht steht auf einer Achse des Stators.

Dienen die Verbindungsbögen der im Sinne einer Parallelschaltung ausgeführten Verbindung von mehr als zwei Wicklungen, so ist an dem jeweiligen Verbindungsbogen bevorzugt jeweils mindestens eine weitere, separat vorgefertigte, im wesentlichen radial einwärts gerichtete Verbindungszunge angebracht, z.B. angelötet oder laserverschweißt. Auch diese (zwischen den beiden endseitigen Verbindungszungen vorgesehenen) zusätzlichen Verbindungszungen weisen bevorzugt einen sich in im wesentlichen radialer Richtung erstreckenden ersten Abschnitt und einen winklig hierzu angeordneten, im wesentlichen axial orientierten zweiten Abschnitt auf.

Gemäß einer wiederum anderen bevorzugten Weiterbildung der vorliegenden Erfindung ist vorgesehen, dass die Verbindungsbögen mittels mindestens eines aus isolierendem Material bestehenden Distanzhalters auf Abstand zueinander gehalten in einen aus Isoliermaterial bestehenden Trägerkörper eingebettet sind. Durch das Einbetten der Verbindungsbögen in isolierendes Material können die Verbindungsbögen, ohne dass die Gefahr eines die Zuverlässigkeit beeinträchtigenden Kurzschlusses besteht, mit besonders geringen Abstand zueinander angeordnet werden. Gegenüber der Ausführung der Verbindungsanordnung mit Luftspaltisolierung zwischen den Verbindungsbögen ist eine Reduzierung der Abstände auf etwa ein Drittel möglich. Dies erlaubt im Ergebnis eine besonders kompakte Bauweise der Verbindungsanordnung. Das Einbetten der Verbindungsbögen in einen Trägerkörper erfolgt dabei besonders bevorzugt in einem Spritzgießprozess. In diesem Falle werden die Verbindungsbögen, durch den besagten Distanzhalter auf einem vorgegebenen Abstand zueinander gehalten, in das Spritzgießwerkzeug eingelegt und mit Trägermaterial umspritzt. Der Trägerkörper weist dabei besonders bevorzugt eine geschlossene Ringform auf, damit unter einem möglichst geringen Materialeinsatz eine möglichst formstabile Verbindungsanordnung erreicht wird.

Die Wicklungen des Stators, welche an jeweils einem ihrer Enden durch die vorstehend erläuterten Verbinder gruppenweise miteinander gekoppelt sind, können besonders bevorzugt an ihrem jeweils zweiten Ende sämtlich mittels einer Ringstruktur miteinander verbunden sein. In diesem Sinne zeichnet sich eine nochmals andere bevorzugte Weiterbildung der Erfindung dadurch aus, dass eine sämtliche Wicklungen miteinander koppelnde Ringstruktur vorgesehen ist, die einen Ringbogen mit einem flachen Querschnitt umfasst, dessen Erstreckung in radialer Richtung größer, bevorzugt wesentlich größer ist als die in axialer Richtung, wobei an dem Ringbogen eine der Anzahl der Windungen entsprechende Anzahl von Verbindungszungen angeordnet ist. Der flache Querschnitt des Ringbogens mit einer geringeren Erstreckung in axialer Richtung als in radialer Richtung ermöglicht wiederum auf geringstmöglichem Raum eine besonders formstabile Ringstruktur.

Gemäß einer besonders bevorzugten Weiterbildung ist der Ringbogen der Ringstruktur durch eine 180°-Faltung aus einem ebenen, zwei miteinander verbundene Bogenabschnitte umfassenden Blechzuschnitt hervorgegangen. Bei dem betreffenden Zuschnitt sind die beiden Bogenabschnitte unterschiedlich lang ausgeführt, d.h. der eine Bogenabschnitt ist etwas länger ausgeführt als der andere Bogenabschnitt, wobei allerdings beide Bogenabschnitte den identischen Radius beschreiben. Der kürzere Bogenabschnitt liegt dabei bei dem Blechzuschnitt zunächst innerhalb des von dem längeren Bogenabschnitt umgrenzten Bereiches. Dies erlaubt, selbst wenn - gemäß einer besonders bevorzugten Ausführungsform - die Verbindungszungen der Ringstruktur einstückig an dem Ringbogen (d.h. zunächst an den beiden Ringbogenabschnitten) angeformt sind, eine besonders materialeffiziente, d.h. mit vergleichsweise wenig Verschnitt verbundene Herstellung der Ringstruktur aus einem einzigen Zuschnitt. Indem die Bogenabschnitte des Ringbogens von Anfang an miteinander verbunden sind und dies auch bleiben, erübrigt sich eine in mehrfacher Hinsicht (elektrische und physikalische Unstetigkeit) nicht optimale Verbindung von zunächst getrennten Bogenabschnitten mittels eines Fügeverfahrens, wobei zugleich, wie vorstehend dargelegt, durch die zu ihrer endgültigen Form faltbare Ringstruktur eine optimale Materialausnutzung (mit einer Materialeinsparung von bis zu 50% gegenüber dem bekannten Ausstanzen einer kreisförmig geschlossenen Ringstruktur aus einem Blech) möglich ist.

Die vorstehend dargelegte Ringstruktur ist an dem Stator besonders bevorzugt benachbart zu der Verbindungsanordnung positioniert. So können die Ringstruktur und die Verbindungsanordnung insbesondere eine einheitliche Baugruppe bilden, wobei beispielsweise die Ringstruktur in den - weiter oben erläuterten - Trägerkörper eingelegt sein kann.

Namentlich bei dynamoelektrischen Maschinen mit einer größeren Phasenzahl (z.B. sechs Phasen) kommt in Betracht, zwei Verbindungsanordnungen vorzusehen, nämlich jeweils eine Verbindungsanordnung (z.B. für drei Phasen) an jeder der beiden Stirnseiten der Statoranordnung.

Weitere vorteilhafte Aspekte ergeben sich aus der nachfolgenden Beschreibung sowie der Erläuterung des in der Zeichnung dargestellten bevorzugten Ausführungsbeispiels.

Im Folgenden wird die vorliegende Erfindung anhand eines in der Zeichnung veranschaulichten bevorzugten Ausführungsbeispiels näher erläutert. Dabei zeigt
- Fig. 1: in einem teilweise schematischen Schnitt einen dreiphasigen bürstenlosen Gleichstrommotor (BLDC-Motor) mit einer nach der vorliegenden Erfindung ausgeführten Verbindungsanordnung. Weiterhin veranschaulichen die
- Fig. 2-7: die Herstellung eines der drei Verbinder der bei dem BLDC-Motor nach Fig. 1 eingesetzten Verbindungsanordnung,
- Fig. 8: die drei zu einem Paket zusammengefasste Verbinder umfassende Verbindergruppe der bei dem BLDC-Motor nach Fig. 1 eingesetzten Verbindungsanordnung,
- Fig. 9 und 10: in zwei Ansichten die mit einem Trägerkörper umspritzte Verbindergruppe nach Fig. 8,
- Fig. 11-13: die Herstellung einer Ringstruktur aus einem ebenen Zuschnitt,
- Fig. 14 und 15: in zwei Ansichten die aus der umspritzten Verbindergruppe nach den Figuren 9 und 10 sowie der Ringstruktur nach Fig. 13 zusammengefügte Baugruppe,
- Fig. 16 und 17: in zwei Ansichten die Baugruppe nach den Figuren 14 und 15 nach dem Abkanten der Verbindungszungen in axiale Richtung,
- Fig. 18: das Aufsetzen eines Deckels auf die Baugruppe nach den Figuren 16 und 17 und
- Fig. 19 und 20: in zwei Ansichten die vollständig montierte, einbaufertige Baugruppe.

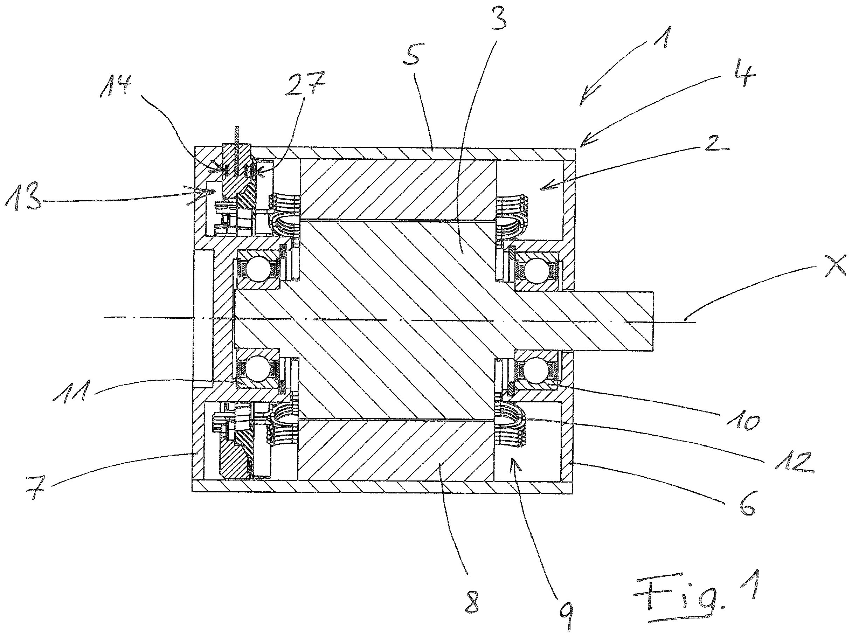

Fig. 1 zeigt eine als dreiphasiger bürstenloser Gleichstrommotor 1 ausgeführte dynamoelektrische Maschine mit einem Stator 2 und einem in diesem um die Achse X drehbar gelagerten, permanenterregten Rotor 3. Der Stator 2 ist lagefest in einem Gehäuse 4, welches ein Mantelteil 5 und zwei endseitig mit diesem verbundene Deckel 6, 7 umfasst, angeordnet; er weist in als solches bekannter Weise eine Kernstruktur 8 und eine Wicklungsanordnung 9 auf. Die drehbare Lagerung des Rotors 3 übernehmen zwei Lager 10, 11, welche in den beiden Deckeln 6, 7 des Gehäuses 4 angeordnet sind.

Die Wicklungsanordnung 9 umfasst sechs gleichmäßig um die Achse X herum angeordnete, in Umfangsrichtung zueinander versetzt positionierte Wicklungen 12. Mittels einer Verbindungsanordnung 13, welche drei gegeneinander isolierte Verbinder 14 umfasst, sind jeweils zwei phasengleiche Wicklungen 12 miteinander in Parallelschaltung verbunden. In diesem Umfang entspricht der BLDC-Motor nach Fig. 1 dem hinlänglich bekannten Stand der Technik, so dass es weiterer Erläuterungen nicht bedarf.

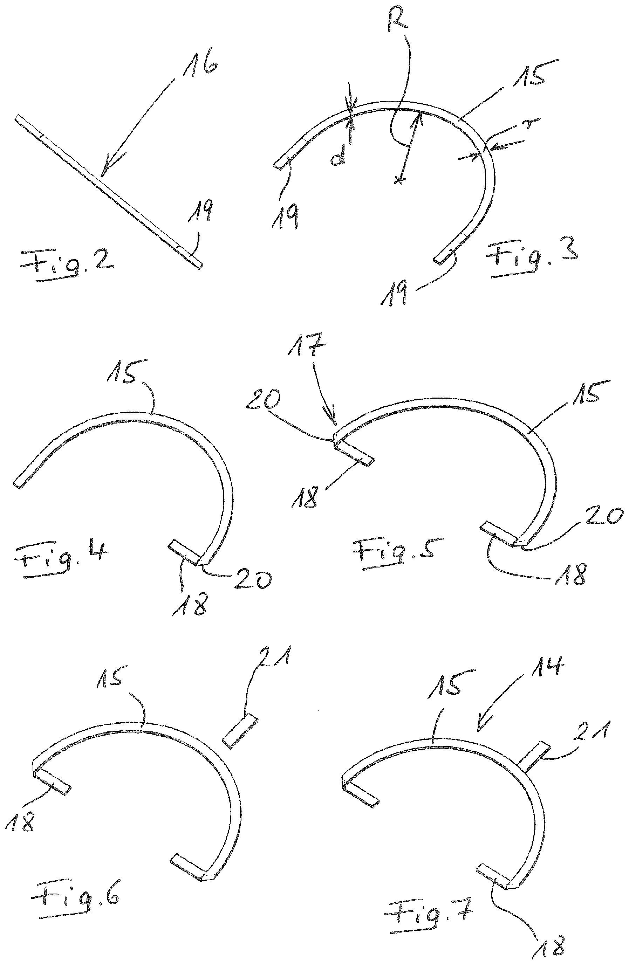

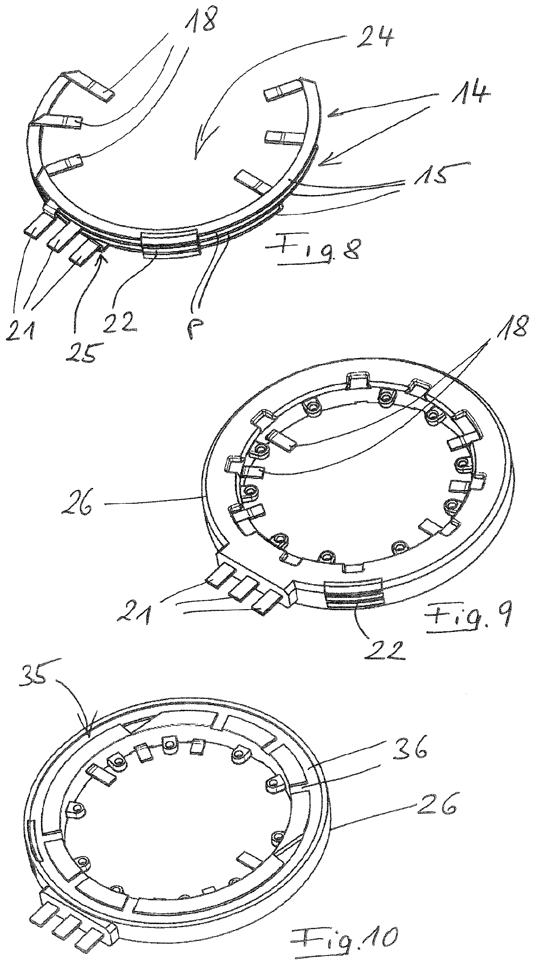

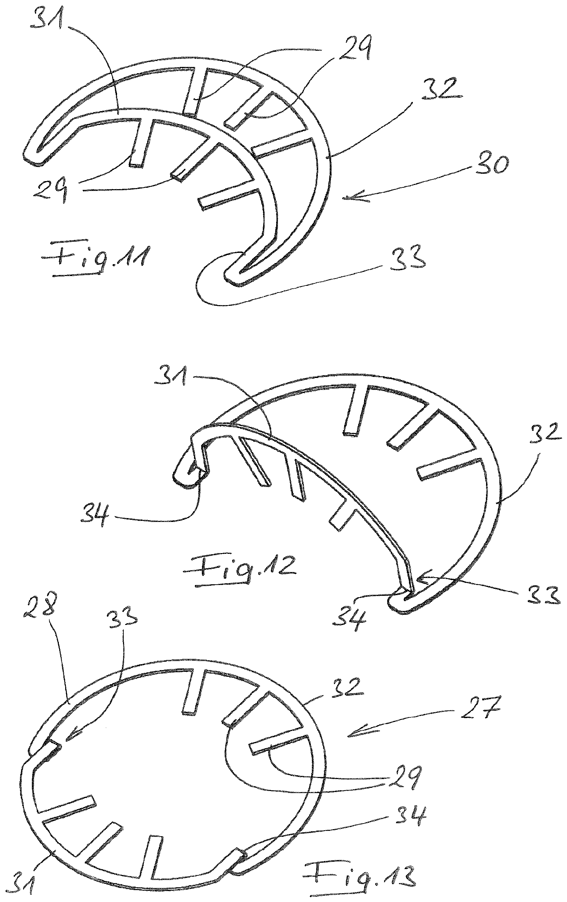

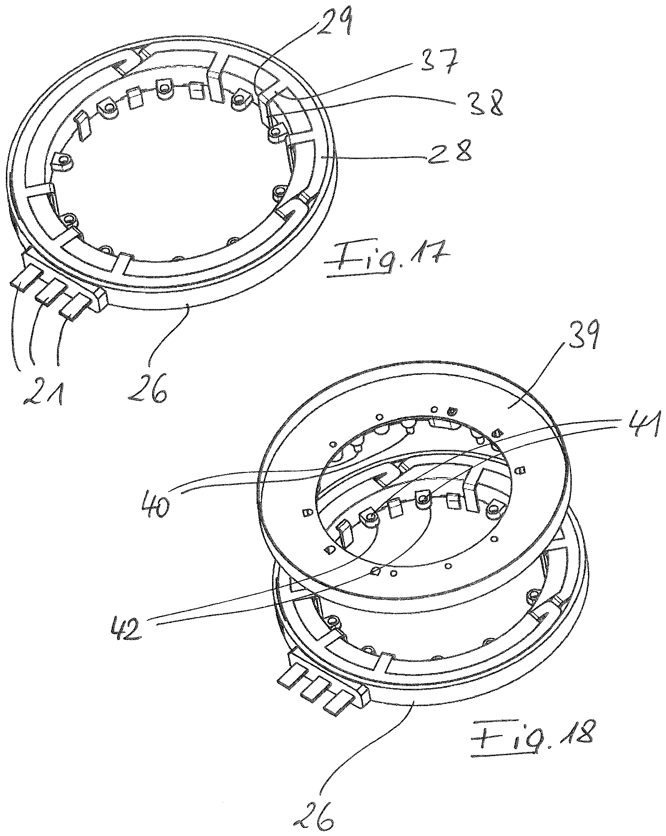

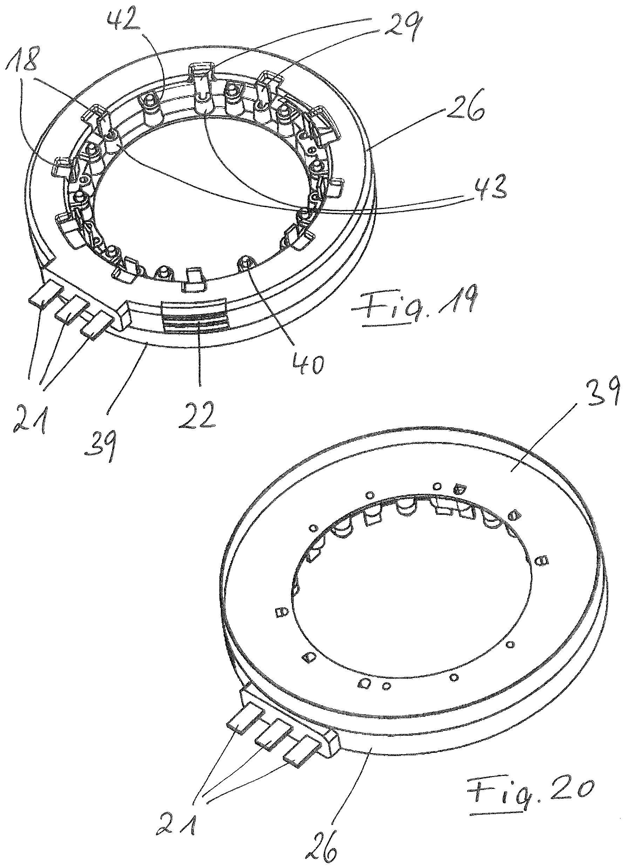

Die Bauweise der Verbindungsanordnung 13 sowie diverse technische Details derselben sind den Figuren 2 bis 20 und der nachfolgenden Erläuterung entnehmbar.

Jeder der drei Verbinder 14 der Verbindungsanordnung 13 weist einen kreisbogensegmentartig gebogenen Verbindungsbogen 15 auf, der aus einem Abschnitt 16 eines metallischen Flachstreifenmaterials gebogen ist, dessen flacher rechteckiger Querschnitt sich durch ausgeprägt unterschiedliche Kantenlängen auszeichnet. Der Verbindungsbogen 15 ist dabei dergestalt gebogen, dass die Erstreckung r in radialer Richtung R wesentlich größer ist als die Erstreckung in axialer Richtung. Mit anderen Worten, die axiale Dicke d des Verbindungsbogens 15 ist wesentlich kleiner als die radiale Ausdehnung r. An seinen beiden Enden 17 geht der Verbindungsbogen 15 jeweils einstückig in eine radial einwärts gerichtete Verbindungszunge 18 über. Hierzu werden die beiden (unverformten, geraden) Endabschnitte 19 des Abschnitts 16 jeweils längs einer (um 45° zu ihrer eigenen Erstreckung gedrehten) Faltkante 20 um 180° einwärts gefaltet, so dass die Verbindungszungen 18 und die Verbindungsbögen 15 unmittelbar benachbart der Faltung, d.h. der Faltkante 20 flächig aneinander anliegen.

An den Verbindungsbogen 15 ist eine separat vorgefertigte, galvanisch beschichtete Anschlussfahne 21 angebracht. Diese wird - unter Verwendung eines Silfos-Pulvers - nach außen weisend stumpf außen an den Verbindungsbogen 15 angelötet. Die Position der Anschlussfahne 21 wird dabei so gewählt, dass die drei Anschlussfahnen 21 der fertigen Verbindungsanordnung 13 nebeneinander liegen. Der axiale Abstand p, den die drei Verbindungsbögen 15 der Verbindungsanordnung 13 zueinander einhalten, wird dabei durch einen aus isolierendem Material bestehenden Distanzhalter 22 vorgegeben. Der Distanzhalter 22 weist hierzu drei Nuten auf, in welche - zur Bildung einer Verbindergruppe 24 - die drei Verbindungsbögen 15 eingelegt sind. Durch eine geringe Kröpfung 25 der an den beiden äußeren Verbindungsbögen 15 angebrachten Anschlussfahnen 21 wird erreicht, dass alle drei Anschlussfahnen 21 in der gleichen Ebene, nämlich der durch den mittleren Verbindungsbogen 15 definierten Ebene angeordnet sind.

Die Verbindergruppe 24 wird sodann in ein Spritzgießwerkzeug eingelegt, in dem aus Isoliermaterial ein kreisförmig geschlossener Trägerkörper 26 gespritzt wird, in welchen die drei Verbinder 14 eingebettet sind. Aus dem ringförmigen Trägerkörper 26 ragen nur nach außen die drei Anschlussfahnen 21 und nach innen die insgesamt sechs Verbindungszungen 18 heraus. Jede der sechs Wicklungen 12 des Stators wird später mit einem ihrer Enden mit einer der sechs Verbindungszungen 18 verbunden.

Die anderen, nicht mit den Verbindungszungen verbundenen Enden der sechs Wicklungen 12 sind mit einer metallischen Ringstruktur 27 verbunden. Diese umfasst einen vollständig geschlossenen Ringbogen 28 und sechs einstückig an diesem angeformte, im Wesentlichen radial einwärts gerichtete Verbindungszungen 29. Der Ringbogen 28 weist einen flach-rechteckigen Querschnitt auf mit einer gegenüber der axialen Erstreckung (Dicke) wesentlich größeren Erstreckung in radialer Richtung. Zur Herstellung der Ringstruktur 27 wird aus einem Metallblech ein ebener Blechzuschnitt 30 ausgestanzt, der zwei Bogenabschnitte 31, 32 mit jeweils drei daran angeformten Verbindungszungen 29 umfasst, wobei die beiden Bogenabschnitte 31, 32 über zwei Verbindungsabschnitte 33 miteinander verbunden sind. Ein kürzerer Bogenabschnitt 31 liegt dabei gewissermaßen innerhalb der durch einen längeren Bogenabschnitt 32 definierten, von diesem umgrenzten Fläche. Im Bereich der beiden Verbindungsabschnitte 33 wird der Blechzuschnitt 30 längs einer Faltkante 34 um 180° gefaltet, so dass die beiden Bogenabschnitte 31, 32 einander zu einem geschlossenen Kreisbogen ergänzen. Beidseits der Faltkante 34 liegen die beiden benachbarten Teile der Verbindungsabschnitte 33 flächig aneinander an.

Bei dem in Fig. 1 gezeigten Stator ist die Ringstruktur 27 benachbart zu der Verbindungsanordnung 13 positioniert. Hierzu wird die Ringstruktur 27 auf eine hierzu vorbereitete Ringfläche 35 des Trägerkörpers 26 aufgelegt, welche bereits zu dem Ringbogen 28 und den Verbindungszungen 29 korrespondierende, diese aufnehmende Aussparungen 36 aufweist.

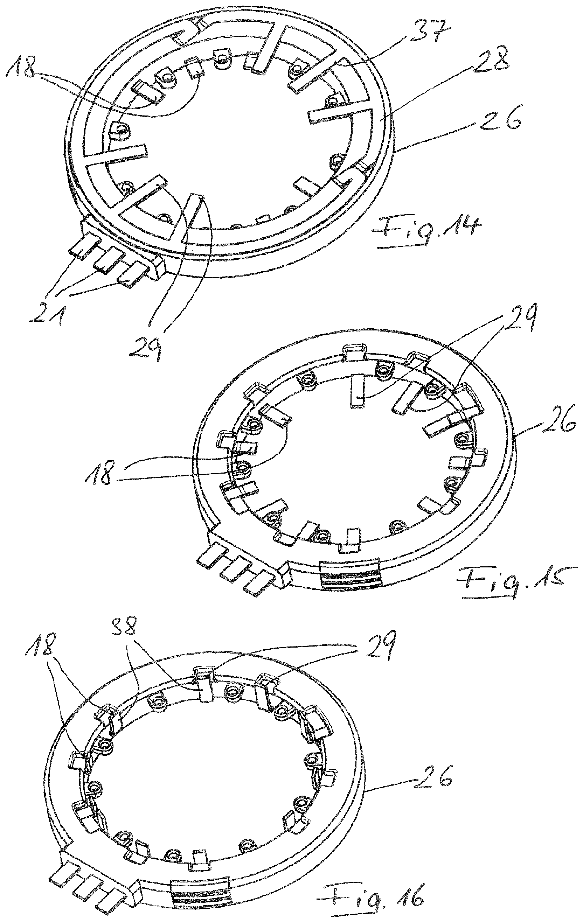

Sowohl die der Ringstruktur 27 zugeordneten Verbindungszungen 29 als auch die der Verbindungsanordnung 13 zugeordneten Verbindungszungen 18 werden anschließend derart um etwa 90° abgewinkelt (vgl. Fig. 16), dass sie jeweils zusätzlich zu dem im Wesentlichen radial einwärts gerichteten Abschnitt 37 einen im wesentlichen axial orientierten Abschnitt 38 umfassen.

Durch Aufsetzen eines Ringdeckels 39 wird abschließend die Montage der Baugruppe abgeschlossen. Der Ringdeckel 39 weist hierzu Stifte 40 auf, welche in korrespondierende Löcher 41 eingreifen, welche in an dem Trägerkörper 26 vorgesehenen Laschen 42 vorgesehen sind. Anschließend werden, um den Ringdeckel 39 dauerhaft mit dem Trägerkörper 26 zu verbinden, die Stifte 40 und die Laschen 42 miteinander verschweißt. Der Ringdeckel 39 weist im Übrigen jeweils den Verbindungszungen 18, 29 zugeordnete Führungen 43 auf, welche die Enden der jeweiligen Wicklung 12 aufnehmen.

## Patentansprüche

1. Stator (2) einer elektrischen Maschine, umfassend eine Kernstruktur (8), eine Wicklungsanordnung (9) mit einer Vielzahl um eine Achse (X) in Umfangsrichtung zueinander versetzt positionierter Wicklungen (12) und eine Verbindungsanordnung (13), welche mehrere Verbinder (14) aufweist, die jeweils mindestens zwei der Wicklungen (12) miteinander in Parallelschaltung verbinden und jeweils aus einem Abschnitt (16) eines metallischen Flachstreifenmaterials gebogene Verbindungsbögen (15) umfassen, deren Erstreckung (r) in radialer Richtung (R) wesentlich größer ist als die in axialer Richtung, indem das metallische Flachstreifenmaterial dergestalt zu den Verbindungsbögen (15) gebogen ist, dass die größere Dimension des Flachstreifenmaterials in radiale Richtung mit Bezug auf die Achse (X), die kleinere Dimension des Flachstreifenmaterials indessen in axiale Richtung mit Bezug auf die Achse (X) weist, wobei an den Verbindungsbögen (15) jeweils eine separat vorgefertigte Anschlussfahne (21) angebracht ist und die Verbindungsbögen (15) jeweils an beiden Enden (17) im Bereich jeweils einer 180°-Faltung einstückig in zumindest abschnittsweise im Wesentlichen radial einwärts gerichtete Verbindungszungen (18) übergehen, welche benachbart der Faltung (20) flächig an dem jeweiligen Verbindungsbogen (15) anliegen und jeweils mit einer Wicklung (12) verbunden sind.

2. Stator nach Anspruch 1, **dadurch gekennzeichnet, dass** die Verbindungszungen (18) jeweils zusätzlich zu einem im Wesentlichen radial einwärts gerichteten Abschnitt (37) einen hierzu abgewinkelten, im Wesentlichen axial orientierten Abschnitt (38) umfassen.

3. Stator nach Anspruch 1 oder Anspruch 2, **dadurch gekennzeichnet, dass** die Anschlussfahnen (21) an dem zugeordneten Verbindungsbogen (15) angeschweißt, angeklebt oder, insbesondere unter Verwendung eines Silfos-Materials, angelötet sind.

4. Stator nach einem der Ansprüche 1 bis 3, **dadurch gekennzeichnet, dass** die Anschlussfahnen (21) eine aus einem andersartigen Material bestehende Oberfläche aufweisen als die Verbindungszungen (18), insbesondere indem sie - bevorzugt vor ihrer Anbringung an dem jeweiligen Verbindungsbogen (15) - galvanisch beschichtet sind.

5. Stator nach einem der Ansprüche 1 bis 4, **dadurch gekennzeichnet, dass** an den Verbindungsbögen (15) jeweils mindestens eine weitere, separat vorgefertigte, im wesentlichen radial einwärts gerichtete, mit einer weiteren Wicklung verbundene Verbindungszunge (18) angebracht ist.

6. Stator nach einem der Ansprüche 1 bis 5, **dadurch gekennzeichnet, dass** die Verbindungsbögen (15) mittels mindestens eines aus isolierendem Material bestehenden Distanzhalters (22) auf Abstand zueinander gehalten in einen aus Isoliermaterial bestehenden, bevorzugt ringförmigen Trägerkörper (26) eingebettet sind.

7. Stator nach einem der Ansprüche 1 bis 6, **dadurch gekennzeichnet, dass** eine sämtliche Wicklungen (12) an jenen Enden, welche nicht mit den Verbindungszungen (18) der Verbindungsbögen (15) verbunden sind, miteinander koppelnde Ringstruktur (27) vorgesehen ist, die einen kreisringförmig geschlossenen Ringbogen (28) mit einem flachen Querschnitt umfasst, dessen Erstreckung in radialer Richtung wesentlich größer ist als die in axialer Richtung, wobei an dem Ringbogen (28) eine der Anzahl der Wicklungen (12) entsprechende Anzahl von Verbindungszungen (29) angeordnet ist.

8. Stator nach Anspruch 7, **dadurch gekennzeichnet, dass** die Verbindungszungen (29) der Ringstruktur (27) einstückig an dem Ringbogen (28) angeformt sind.

9. Stator nach Anspruch 7 oder Anspruch 8, **dadurch gekennzeichnet, dass** der Ringbogen (28) der Ringstruktur (27) durch eine 180°-Faltung (34) hervorgegangen ist aus einem ebenen Blechzuschnitt (30), der zwei über Verbindungsabschnitte (33) miteinander verbundene Bogenabschnitte (31, 32) umfasst und bei dem ein kürzerer Bogenabschnitt (31) innerhalb der durch einen längeren Bogenabschnitt (32) definierten, von diesem umgrenzten Fläche liegt, wobei der Blechzuschnitt (30) im Bereich der beiden Verbindungsabschnitte (33) längs einer Faltkante (34) dergestalt um 180° gefaltet ist, dass die beiden Bogenabschnitte (31, 32) einander zu einem geschlossenen Kreisbogen ergänzen.

10. Stator nach einem der Ansprüche 7 bis 9, **dadurch gekennzeichnet, dass** die Ringstruktur (27) benachbart zu der Verbindungsanordnung (13) positioniert ist.

11. BLDC-Motor, umfassend einen Stator (2) nach einem der Ansprüche 1 bis 10 und einen drehbar zu diesem gelagerten permanenterregten Rotor (3).

## Claims

1. Stator (2) of an electrical machine, comprising a core structure (8), a windings arrangement (9) and a plurality of windings (12) positioned offset with regard to each other about an axis (X) in the circumferential direction and a connecting device (13), which has several connectors (14) which each connect at least two of the windings (12) to one another in parallel and each comprise connecting arcs (15) bent from a section (16) of a metallic flat strip material, the extension (r) of which in the radial direction (R) is essentially greater than that in the axial direction in that the metallic flat strip material is bent to form the connecting arc (15) in such a way that the larger dimension of the flat strip material points in the radial direction in relation to the axis (X), the smaller dimension of the flat strip material in the axial direction in relation to the axis (X), wherein on each of the connecting arcs (15) a separately prefabricated connecting lug (21) is applied and the connecting arcs (15) at both ends (17) in the area of a 180° fold in one piece at least in sections become essentially radially inwardly-directed connecting tabs (18), which adjacent to the fold (20) are in flush contact with the respective connecting arc (15) and each connected with one winding (12).

2. Stator according to claim 1 **characterised in that** the connecting tabs (18) in addition to an essentially radially inwards-directed section (37) have, at an angle thereto, an essentially axially orientated section (38).

3. Stator according to claim 1 or claim 2 **characterised in that** the connecting lugs (21) are welded, adhered or, in particular using a SilFos material, soldered onto the assigned connecting arc (15).

4. Stator according to any one of claims 1 to 3 **characterised in that** the connecting lugs (21) have a surface made of a different material from the connecting tabs (18), in particular they are galvanically coated - preferably before being applied to the respective connecting arc (15).

5. Stator according to any one of claims1 to 4 **characterised in that** applied to each of the connecting arcs (15) is at least one further, separately prefabricated, essentially radially inwardly-directed connecting tab (18) which is connected to a further winding.

6. Stator according to any one of claims 1 to 5 **characterised in that** the connecting arcs (15), held at a distance from one another by means of spacers (22) made of an insulating material, are embedded in a preferably annular carrier body (26) made of insulating material.

7. Stator according to any one of claims 1 to 6 **characterised in that** a ring structure (27) is provided, connecting all windings (12) at those ends which are not connected to the connecting tabs (18) of the connecting arcs (15), which comprises an annular, closed ring arc (28) with a flat cross-section, the extension of which in the radial direction is essentially greater than that in the axial direction, wherein on the ring arc (28) a number of connecting tabs (29) corresponding to the number of windings (12) are arranged.

8. Stator according to claim 7 **characterised in** the connecting tabs (29) of the ring structure (27) are formed in one piece on the ring arc (28).

9. Stator according to claim 7 or claim 8 **characterised in that** the ring arc (28) of the ring structure (27) is the result of a 180° fold (34) from a flat cut metal sheet (30) which comprises two arc sections (31, 32) connected to each other via connecting sections (33) and in which a short arc section (31) lies within the area defined by the longer arc section (32) and surrounded thereby, wherein the cut metal sheet (30) is folded about 180° along a folding edge (34) in the area of the two connecting sections (33) in such a way that the two arc sections (31, 32) supplement each other to form a closed circular arc.

10. Stator according to any one of claims 7 to 9 **characterised in that** the ring structure (27) is positioned adjacent to the connecting device (13).

11. BLDC motor comprising a stator (2) according to any one of claims 1 to 10 and a permanently excited rotor (3) borne in a rotatable manner relative thereto.

## Revendications

1. Stator (2) d'une machine électrique, comprenant une structure de noyau (8), une configuration d'enroulement (9) pourvue d'une pluralité d'enroulements (12) positionnés avec un décalage mutuel autour d'un axe (X) dans la direction périphérique et une configuration de liaison (13) qui comporte plusieurs connecteurs (14), qui relient l'un à l'autre chaque fois au moins deux des enroulements (12) en un montage en parallèle et comprennent chacun des arcs de raccordement (15) recourbés à partir d'un segment d'une matière en bande métallique plate, dont l'extension (r) en direction radiale (R) est sensiblement supérieure à celle en direction axiale, en ce que la matière en bande métallique plate est recourbée vers les arcs de raccordement (15) de telle sorte que la plus grande dimension de la matière en bande plate montre dans la direction radiale, en rapport à l'axe (X), la plus petite dimension de la matière en bande plate montre cependant dans la direction axiale, en rapport à l'axe (X), sur les arcs de raccordement (15) étant placé chaque fois une patte de raccordement (21) préfabriquée séparément et chaque fois sur les deux extrémités (17), dans la région de chaque fois un pliage à 180°, les arcs de raccordement (15) passent en monobloc dans des languettes de liaison (18) dirigées au moins par segments sensiblement en direction radiale vers l'intérieur, lesquelles au voisinage du pliage (20) sont adjacentes à plat à l'arc de raccordement (15) et sont reliées chacune avec un enroulement (12).

2. Stator selon la revendication 1, **caractérisé en ce que** qu'en supplément d'un segment (37) dirigé sensiblement en direction radiale vers l'intérieur, les languettes de liaison (18) comprennent chacune un segment (38) coudé par rapport à celui-ci, orienté sensiblement en direction axiale.

3. Stator selon la revendication 1 ou la revendication 2, **caractérisé en ce que** les pattes de raccordement (21) sont soudées, collées ou notamment brasées sur l'arc de raccordement (15) associé, notamment en utilisant une matière Silfos.

4. Stator selon l'une quelconque des revendications 1 à 3, **caractérisé en ce que** les pattes de raccordement (21) comportent une surface constituée d'une matière de type différent de celle des languettes de liaison (18), notamment **en ce qu'**elles sont galvanisées (de préférence avant leur montage sur l'arc de raccordement (15) en question).

5. Stator selon l'une quelconque des revendications 1 à 4, **caractérisé en ce que** sur les arcs de raccordement (15) est montée respectivement au moins une languette de liaison (18) supplémentaire, préfabriquée séparément, dirigée sensiblement vers l'intérieur en direction radiale, reliée avec un enroulement supplémentaire.

6. Stator selon l'une quelconque des revendications 1 à 5, **caractérisé en ce que**, maintenus à un écart mutuel au moyen d'au moins un espaceur (22) constitué en une matière isolante, les arcs de raccordement (15) sont incorporés dans un corps porteur (26), de préférence de forme annulaire, constitué d'une matière isolante.

7. Stator selon l'une quelconque des revendications 1 à 6, **caractérisé en ce qu'**il est prévu une structure annulaire (27) connectant l'ensemble des enroulements (12) sur les extrémités qui ne sont pas reliées avec les languettes de liaison (18) des arcs de raccordement (15), qui comprend un arc de cercle (28) fermé en forme d'un anneau circulaire pourvu d'une section transversale plate, dont l'extension dans la direction radiale est sensiblement supérieure à celle dans la direction axiale, sur l'arc de cercle (28) étant placé un nombre de languettes de liaison (29) correspondant au nombre des enroulements (12).

8. Stator selon la revendication 7, **caractérisé en ce que** les languettes de liaison (29) de la structure annulaire (27) sont façonnés en monobloc sur l'arc de cercle (28).

9. Stator selon la revendication 7 ou la revendication 8, **caractérisé en ce que** l'arc de cercle (28) de la structure annulaire (27) est issu d'un pliage à 180° (34) à partir d'une découpe de tôle (30) plane, qui comprend deux segments arqués (31, 32) reliés l'un à l'autre par l'intermédiaire de segments de liaison (33) et sur laquelle un segment arqué (31) plus court, se situe à l'intérieur d'une surface définie par un segment arqué (32) plus long, délimitant ce dernier, dans la région des deux segments de liaison (33), la découpe en tôle (30) étant pliée de 180° le long d'une arête de pliage (34) de telle sorte que les deux segments arqués (31, 32) se complètent en un arc de cercle fermé.

10. Stator selon l'une quelconque des revendications 7 à 9, **caractérisé en ce que** la structure annulaire (27) est positionnée au voisinage de la configuration de liaison (13) .

11. Moteur BLDC, comprenant un stator (2) selon l'une quelconque des revendications 1 à 10 et un rotor (3) excité en permanence, logé de manière rotative par rapport à celui-ci.
